(19) Europäisches Patentamt
European Patent Office
Office européen des brevets

(11) **EP 3 100 057 B1**

## (12) FASCICULE DE BREVET EUROPEEN

(45) Date de publication et mention de la délivrance du brevet:
**05.08.2020 Bulletin 2020/32**

(21) Numéro de dépôt: **15706870.1**

(22) Date de dépôt: **28.01.2015**

(51) Int Cl.:
*G01P 5/01* *(2006.01)*    *G01F 1/32* *(2006.01)*

(86) Numéro de dépôt international:
**PCT/FR2015/050194**

(87) Numéro de publication internationale:
**WO 2015/114251 (06.08.2015 Gazette 2015/31)**

### (54) DISPOSITIF DE MESURE DE LA VITESSE DE DEPLACEMENT D'UN FLUIDE PAR RAPPORT A UN OBJET

VORRICHTUNG ZUR MESSUNG DER FORTBEWEGUNGSGESCHWINDIGKEIT EINES FLUIDS IM VERHÄLTNIS ZU EINEM OBJEKT

DEVICE FOR MEASURING THE TRAVELLING SPEED OF A FLUID IN RELATION TO AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2014 FR 1450676**

(43) Date de publication de la demande:
**07.12.2016 Bulletin 2016/49**

(73) Titulaire: **Polyvionics**
**75015 Paris (FR)**

(72) Inventeur: **QUERRY, Stéphane Luc Sébastien**
**F-75015 Paris (FR)**

(56) Documents cités:
**WO-A1-90/04230      WO-A1-93/22626**
**DE-C1- 4 143 202      GB-A- 1 483 818**
**GB-A- 2 067 757      JP-A- S62 223 672**
**US-A- 4 074 571      US-A- 4 244 230**
**US-B1- 6 370 949**

**Description**

## DOMAINE TECHNIQUE DE L'INVENTION

L'invention concerne un système capable de mesurer la vitesse de déplacement d'un fluide par rapport à un objet. Ledit objet peut être par exemple un mobile aérien, terrestre, maritime, spatial, etc., une soufflerie, une turbomachine, une canalisation ou une station météorologique.

## ETAT DE LA TECHNIQUE ANTERIEURE

En aéronautique, ainsi que dans d'autres domaines techniques, l'estimation de la vitesse d'un fluide en écoulement relatif (vitesse aérodynamique d'un aéronef, par exemple) se fait couramment par l'intermédiaire d'un tube Pitot. Ce tube mesure la pression statique ou ambiante ainsi que la pression totale, créé par l'impact du fluide sur une capsule, et calcule ensuite, par un algorithme, la vitesse aérodynamique de l'aéronef.

Cependant, dans un certain nombre de cas, le tube de Pitot peut être soumis à une obstruction, givrage par exemple pour un aéronef, dû à son altitude du vol, à la pression atmosphérique, à la température et à l'humidité de l'environnement, aux cristaux contenus dans les nuages, ainsi qu'aux points d'arrêt de l'air à certains endroits de la sonde. Ces éléments rendent ce capteur, le tube de Pitot, inopérant. A titre illustratif la société Airbus a reconnu pas moins de 36 incidents d'obstruction possible de sondes Pitot par de la glace, sur des avions A330/A340, entre le 12 novembre 2003 et le 7 août 2009, la société Boeing étant largement confronté à la même problématique.

## EXPOSE DE L'INVENTION

L'invention vise à remédier aux inconvénients de l'état de la technique et notamment à proposer un dispositif de mesure de la vitesse de déplacement relative d'un fluide par rapport à un objet, le dispositif comprenant un corps principal adapté pour être installé sur l'objet et dans lequel une cavité (1) ouverte vers l'extérieur par une seule ouverture est effleurée par le mouvement relatif dudit fluide par rapport audit corps principal (40) le long d'un axe X, ce qui génère au sein de ladite cavité (1) un phénomène d'oscillation auto-entretenue dépendant de la vitesse de déplacement dudit fluide, le corps principal (40) étant adapté pour être installé sur une surface d'installation de l'objet et comprenant une paroi amont et une paroi aval d'une hauteur supérieure à la paroi amont (11), la paroi aval (12) étant inclinée par rapport au plan normal à l'axe X, le dispositif comprenant au moins un capteur (2), le ou les capteurs étant installés dans des parois de la cavité (1), ou contre lesdites parois, par un système de maintien, et exploitant ledit phénomène d'oscillation auto-entretenue en coopérant avec au moins un ordinateur (3) pour calculer la vitesse relative de déplacement dudit fluide.

Généralement, l'objet par rapport auquel on mesure la vitesse de déplacement du fluide peut être un mobile aérien, terrestre, maritime/fluvial, spatial, une canalisation ou une station météorologique.

Particulièrement, le corps dans lequel est placé la cavité a une forme aérodynamique demi-conique ou une forme en profil pseudo triangulaire de type tremplin selon un plan de coupe XY, l'axe Y perpendiculaire à l'axe X, défini comme étant la normale à la base du dispositif en contact avec la surface d'installation (50).

Par ailleurs, le front (41) du corps (40) fait un angle $\theta$, angle entre le plan XZ ou la base du dispositif en contact avec la surface d'installation (50) et le « front » du dispositif, compris entre 0 et 90 degrés, l'axe Z étant défini de manière à ce que le repère XYZ soit un repère orthonormé direct.

Selon ce mode de réalisation, la cavité comprend une paroi aval inclinée, de manière à faire un angle $\theta'$ avec le plan YZ ou la normale de la base du dispositif en contact avec la surface d'installation (50), compris entre 0 et 90°.

Par ailleurs, la normale de l'ouverture de la cavité fait un angle compris entre 0 et 90 degrés avec la normale de sa surface d'installation ; en d'autres termes, la hauteur de la paroi amont est inférieur à la hauteur de la paroi aval, selon l'axe $y$.

En outre, la cavité est telle que la largeur moyenne de sa paroi amont selon un axe Z soit inférieure à la largeur moyenne de sa paroi aval selon ledit axe Z. Aussi, au moins une partie des parois de ladite cavité peut être souples. Selon un autre mode de réalisation de l'invention, l'élément générateur d'instabilité aérodynamique ou hydrodynamique locale, fait partie de l'objet.

Avantageusement, ledit au moins un capteur permettant de mesurer l'instabilité aérodynamique ou hydrodynamique peut être choisi parmi : capteur inertiel, capteur de pression, microphone ou hydrophone, capteur à corde vibrante, capteur de contrainte, capteur de force, capteur de déplacement, capteur à fil chaud, sur n axes avec $n >= 1$.

Avantageusement, les capteurs d'instabilités, de par leur capacité à mesurer les instabilités, sont installés à l'intérieur du corps dans des parois de la cavité, ou contre desdites parois, soit à l'intérieur soit à l'extérieur par l'intermédiaire d'un système de maintien. En outre, l'élément générateur de l'instabilité aérodynamique ou hydrodynamique locale, le corps (40), comprend au moins un capteur de température, apte à mesurer sa propre température et/ou au moins une résistance chauffante pilotable afin de réguler la température dudit dispositif.

En outre, l'élément générateur de l'instabilité aérodynamique ou hydrodynamique locale, le corps (40), comprend au moins un capteur de température du fluide, et, au moins un capteur de pression statique du fluide (dans le cas où il serait compressible).

Particulièrement, l'ordinateur comprenant un système d'interfaçage avec tous les capteurs (2) permettant de mesurer l'instabilité aérodynamique ou hydrodynamique, ainsi que les capteurs de températures (6) et (8), de pression statique du fluide (9) et la/les résistance(s) chauffante(s) (7), et la/les résistance(s) chauffante(s), ainsi que de la mémoire de stockage, est destiné à réaliser des traitements nécessaires pour estimer la vitesse d'écoulement du fluide par rapport à la cavité.

Particulièrement, l'ordinateur est apte à réaliser les tâches suivantes: - l'interfaçage avec ledit au moins un capteur pour importer leurs mesures ; - prétraitement des données, par l'intermédiaire de filtrage de Kalman, d'un filtre passe-bas, d'un régresseur linéaire polynomial glissant; - détermination de la transformée de Fourier et de la densité spectrale des instabilités induites.

Par ailleurs, lesdits traitements comprennent : - la détermination des fréquences de réponse en instabilité, par identification d'au moins un pic de puissance; - l'estimation de la vitesse de déplacement du fluide par rapport à l'élément par application d'une formule reliant fréquence(s) et vitesse comme la formule de Rossiter par exemple et - la réalisation d'une surveillance du système.

Avantageusement, l'ordinateur est en outre destiné à réaliser des traitements pour réguler la température de l'élément, à une température prédéterminée via un interfaçage, par l'utilisation d'au moins un capteur de température, puis par le calcul de la commande à envoyer à au moins une résistance chauffante via un interfaçage avec ladite au moins une résistance chauffante.

Avantageusement, le corps (40) comprend des capteurs de vibrations, de manière à disposer d'une référence de vibrations perturbatrices non induites par le fluide, de telle sorte que la différence de la densité spectrale des vibrations induites par l'écoulement du fluide avec la densité spectrale des vibrations perturbatrices permette d'isoler les vibrations induites.

De plus, l'ordinateur est apte à comparer les calculs de vitesses issus de différents types de capteurs, afin de déterminer si le ou les capteurs sont opérationnels.

En outre, l'ordinateur est capable de mesurer l'intensité du courant traversant chaque résistance chauffante, via des modules ou des ports de communication dédiés à cet effet, de manière à détecter une résistance défaillante.

Selon un mode de réalisation de l'invention, le dispositif comprend en outre un système d'alimentation, destiné à fournir en tension et courant l'ordinateur et/ou les capteurs et/ou la (les) résistance(s) chauffante(s) et/ou carte de ports de communication à l'ordinateur et un système de communication sans fil.

De préférence, le corps (40) comprend tout ou partie des modules nécessaires à son fonctionnement.

En outre, le dispositif comprend plusieurs ordinateurs, plusieurs systèmes d'alimentation, plusieurs cartes de ports de communication, chaque élément étant prévu en redondance de manière à ce qu'un élément remplisse sa fonction si un élément similaire, en redondance, est défaillant.

## BREVE DESCRIPTION DES FIGURES

D'autres caractéristiques, détails, et avantages de l'invention ressortiront à la lecture de la description qui suit, en référence aux figures annexées, qui illustrent :

- la figure 1 représente une schématisation du comportement d'un fluide en écoulement pénétrant dans une cavité, dans lequel on peut voir la génération de l'oscillation auto-entretenue, due au choc de la couche de cisaillement sur la paroi aval de ladite cavité ;
- la figure 2 représente la densité spectrale des vibrations d'une paroi de la cavité, lesdites vibrations ayant été induites par l'écoulement d'un fluide dans ladite cavité, pour trois vitesses d'écoulement différentes du fluide ;
- la figure 4 représente dans le plan XY un mode de réalisation de l'invention, la figure 3 dans le plan XZ représente le corps en forme conique contenant la cavité 1 ;
- la figure 5 représente un schéma électronique fonctionnel de l'invention.

Pour plus de clarté, les éléments identiques ou similaires sont repérés par des signes de référence identiques sur l'ensemble des figures.

## DESCRIPTION DETAILLEE

Le principe de fonctionnement de la présente invention est le suivant : tout élément d'un objet soumis à la circulation d'un fluide crée une instabilité aérodynamique locale du fluide, dont les caractéristiques, mesurables par différents capteurs de pression, de vibration, etc., dépendent de sa vitesse découlement. Ainsi, il est possible d'estimer la vitesse de déplacement ou d'écoulement du fluide par rapport à l'objet en temps réel, en analysant les mesures effectuées.

Le fluide environnant en mouvement relatif génère au sein de ladite cavité (1) une oscillation auto-entretenue, contenant plusieurs modes fréquentiels, $f_n$. Les fréquences de cette instabilité $f_n$ peuvent être déterminées par la formule de Rossiter : $f_n = \dfrac{n - \gamma'}{M + 1/k} \dfrac{U_\infty}{L}$,

avec $U\infty$ : Vitesse d'écoulement du fluide, $L$ : longueur de la cavité, $n$ : nombre entier représentant le mode, $k$ : constante empirique représentant le rapport entre la vitesse de propagation des tourbillons et la vitesse du fluide non perturbé (constante de Rossiter $k = 0.57$), $\gamma$ : constante empirique représentant l'écart entre l'impact du tourbillon sur le bord de la cavité et l'émission de l'onde acoustique (constante de Rossiter $\gamma$ = 0.25), $M$ : nombre de mach, équivalente à $M = U_\infty/c$, avec $c$, vitesse du son dans l'environnement courant. A noter que la vitesse du son ($c$), peut être calculée avec la formule :

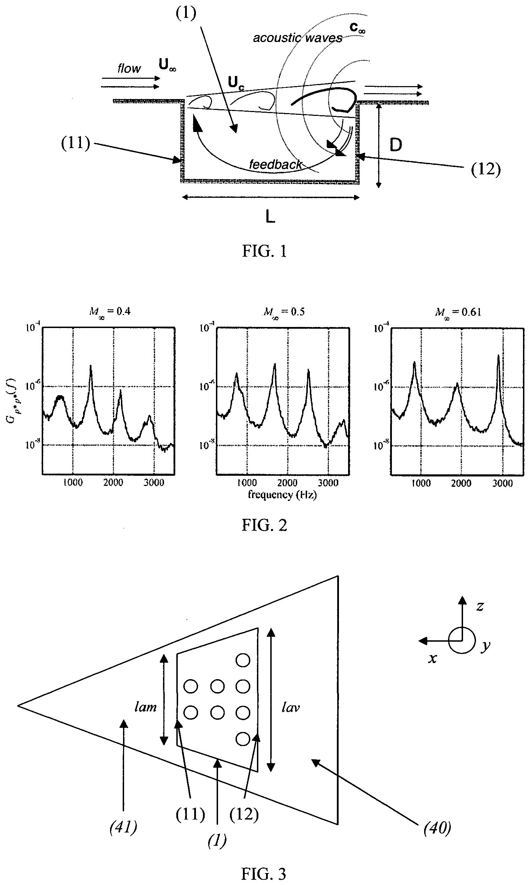

$$c = \sqrt{\gamma.R_s.T}$$ , avec $\gamma$ : coefficient de compressibilité (1.4 pour l'air), $R_s$ : constante spécifique du gaz (287 J.kg$^{-1}$.K$^{-1}$ pour l'air) et $T$ : température environnante. Lorsqu'on calcule la densité spectrale de telles vibrations (Fig. 2), ces fréquences ($f_n$) sont également matérialisées par des pics de densité, on peut ainsi aisément les déterminer.

Cette instabilité aérodynamique crée une variation de pression et/ou une vibration, de fréquences $f_n$ (dans le cas d'une cavité) et, ainsi, être mesurable par un capteur de pression, de vibrations, un microphone, etc. Ainsi, en déterminant la densité spectrale des instabilités induites par l'écoulement du fluide et mesurées par les capteurs, et en identifiant les fréquences $f_n$ pour lesquelles la réponse en puissance est maximale, il est possible d'estimer la vitesse aérodynamique $U$ de l'écoulement d'un fluide, en appliquant la formule de Rossiter, par exemple.

L'estimation de la vitesse est donc basée sur un élément très important des phénomènes vibratoires induits par l'air : les oscillations entretenues formulés par Rossiter. Il est donc essentiel, pour que cette méthode soit viable, de bien déterminer les paramètres de l'élément (en soufflerie, ou par toute autre méthode : étalonnage, etc.) dans toutes ses conditions d'utilisation (différentes directions de l'écoulement (angle d'attaque), de Reynolds, etc.).

## DESCRIPTION SELON DES MODES PARTICULIERS DE REALISATION

En outre, le corps (40), générateur de l'instabilité aérodynamique ou hydrodynamique locale, peut être une cavité déjà présente sur l'objet.

Dans le cas d'un dispositif indépendant, ledit dispositif est installé ou fixé à n'importe quel endroit de l'objet. Par exemple, fuselage, voilure, empennage, dérive, etc. dans le cas d'un mobile aérien ; carrosserie pour un véhicule terrestre ; coque pour un véhicule maritime/fluvial ; paroi pour une canalisation; poteau pour une station météorologique.

L'invention comprend un capteur (2), éventuellement en redondance, apte à mesurer l'instabilité aérodynamique. Ce ou ces capteurs est/sont de type capteur solide de pression.

Le dispositif comprend au moins un capteur de température (6), éventuellement en redondance, apte à mesurer la température dudit dispositif pour sa régulation en température. Ledit dispositif peut aussi disposer d'au moins une résistance chauffante (7) (éventuellement en redondance) pour sa régulation en température.

Le corps (40) dispose d'au moins un capteur de température du fluide (8) (éventuellement en redondance). Ledit capteur 8 peut être en contact avec le fluide pour le calcul de la vitesse du son dans l'environnement. De même, le corps (40) peut disposer d'au moins un capteur de pression statique de l'air (9) (éventuellement en redondance) pour le calcul de la densité de l'air (avec la connaissance de la température du fluide).

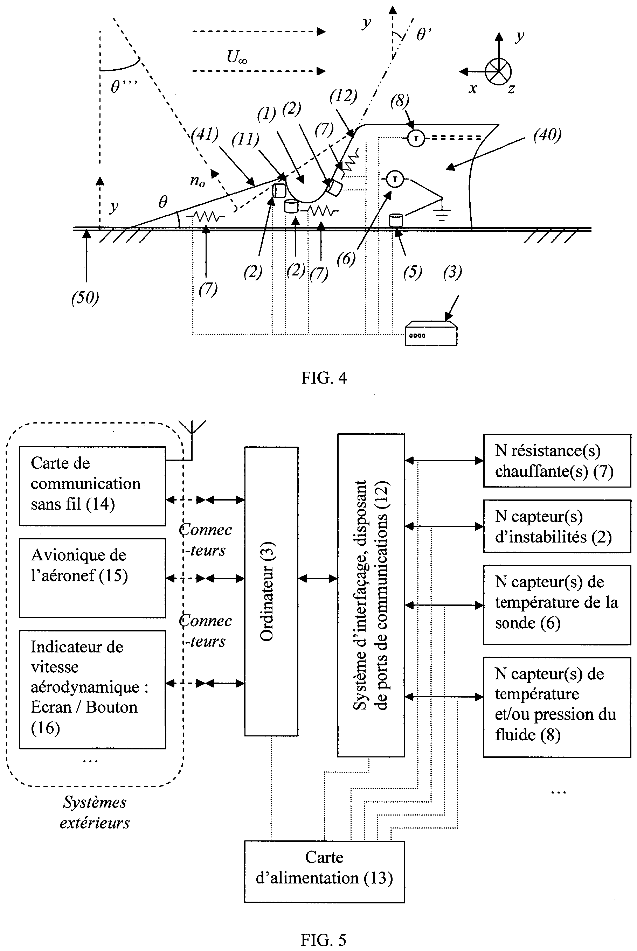

Le dispositif selon la présente invention comprend un calculateur ou ordinateur (3) embarqué. Tel qu'illustré plus spécifiquement sur la figure 5, ledit ordinateur (3), contenant de la mémoire de stockage est relié aux capteurs (2), (6), (8), (9) aux résistances (7), etc. à travers des ports de communication (12), intégrés à l'ordinateur, ou mis à disposition par une carte indépendante (12). Les ports de communication (12) peuvent être reliés, ou non, à des connecteurs pour toute communication avec un système extérieur (20). Ledit système extérieur peut comprendre une carte de communication sans fil (14), l'avionique de l'aéronef (15). L'avionique de l'aéronef constitue l'ensemble des équipements électroniques, électriques et informatiques qui aident au pilotage des aéronefs. Le système extérieur (20) peut comprendre en outre un indicateur de vitesse aérodynamique (16). L'ordinateur (3) est connecté à un système d'alimentation (13). Ledit système d'alimentation (13) est destiné à fournir du courant électrique à l'ensemble des modules (capteurs, résistances). L'ordinateur (3) est destiné à réaliser les traitements nécessaires à la réalisation de l'algorithme d'estimation de la vitesse d'écoulement du fluide.

L'ordinateur (3) est chargé de réaliser les tâches suivantes : - interfaçage avec les capteurs (2) d'instabilité aérodynamique ou hydrodynamique, pour importer leurs mesures ; - prétraitement de données (filtrage de Kalman, filtre passe-bas, régresseur linéaire polynomial glissant, etc.) ; - détermination de la transformée de Fourier et de la densité spectrale des instabilités induites (en position, en vitesse ou accélération des pressions, vibrations, ou autre).

L'ordinateur 3 réalise l'algorithme suivant :

○ détermination des fréquences $f_n$ de réponse en instabilité (par identification des pics de puissance des différents modes) de la densité spectrale ;

○ estimation de la vitesse de déplacement du fluide par rapport à l'élément 1, par application de la formule de calcul de vitesse, en fonction de la vitesse du son environnant ($c$) :

$$U_\infty = \frac{c.f_n L}{k(c(n-\gamma') - f_n L)}$$ , avec $U_\infty$ : Vitesse d'écoulement du fluide,

$c$ : vitesse du son dans l'environnement courant, $f_n$ : fréquences d'oscillations de la cavité, $L$ : longueur de la cavité, $k$ : constante empirique représentant le rapport entre la vitesse de propagation des tourbillons et la vitesse du fluide non perturbé (constante de Rossiter $k$ = 0.57), $n$ : nombre entier représentant le mode, $\gamma'$ : constante empirique représentant l'écart entre l'impact du tourbillon sur le bord de la cavité et l'émission de l'onde acoustique (constante de Rossiter $\gamma'$ = 0.25).

Dans le cas où l'ordinateur (3) connaît la température du fluide environnant, par l'intermédiaire du capteur de température (8), ou par un système externe connecté à l'ordinateur, il peut alors calculer la vitesse d'écoulement du fluide en utilisant la formule suivante :

$$U_\infty = \frac{\sqrt{\gamma.R_s.T}\,f_n L}{k(\sqrt{\gamma.R_s.T}(n-\gamma') - f_n L)} \text{, avec } \gamma: \text{coeffi-}$$

cient de compressibilité (1.4 pour l'air), $R_s$ : constante spécifique du gaz (287 J.kg$^{-1}$.K$^{-1}$ pour l'air) et $T$ : température environnante.

L'identification d'un pic de puissance peut être réalisée par différents moyens : Calcul et analyse de tendance(s), calcul et analyse de dérivée(s), etc.

Le corps (40) générateur de l'instabilité aérodynamique peut contenir plusieurs capteurs de vibrations (5) placés à différents endroits, éventuellement en redondance, de manière à disposer d'une référence de vibrations perturbatrices non induites par le fluide. Ainsi, une différence entre la densité spectrale des vibrations induites (par l'écoulement du fluide) et la densité spectrale des vibrations perturbatrices permet d'isoler les vibrations induites.

En outre, l'ordinateur (3) réalise tous les traitements permettant de réguler la température du dispositif à une température prédéterminée renseignée par un utilisateur. Le traitement effectué par l'ordinateur (3) pour réguler la température du dispositif est alors le suivant:

○ interfaçage du capteur de température (6) du dispositif, pour importer les mesures de température,
○ algorithme de régulation de la température du dispositif pour calculer la commande à envoyer à une résistance chauffante (7),
○ interfaçage avec la (les) résistance(s) chauffante(s) (7) pour envoyer la commande.

Comme illustré par la figure 5 les capteurs et les résistances peuvent être reliés à un ordinateur (3), à des microprocesseurs et/ou à des microcontrôleurs, contenant de la mémoire de stockage. Des ports de communication (12) intégrés à l'ordinateur (3), ou mis à disposition par une carte indépendante reliée audit ordinateur permettent les liaisons entre les modules (capteurs, résistances) et l'ordinateur.

Le dispositif peut comprendre en outre un système d'alimentation 13 (module ou carte électronique d'alimentation par exemple) contenu dans l'élément 1 à l'origine de l'instabilité aérodynamique, ou non. Le système d'alimentation 13 est destiné à fournir du courant électrique adapté à l'ensemble des modules : les capteurs 2, 6, 8, les résistances chauffantes 7, la carte offrant des ports de communication 12 à l'ordinateur 3, un système de communication sans fil 14, etc.

Par ailleurs, l'ordinateur (3) peut être relié à des connecteurs destinés à alimenter en courant électrique ledit ordinateur (3), les capteurs, les résistances chauffantes (7), la carte offrant les ports de communication (12) à l'ordinateur (3), le système de communication sans fil (14), etc. Lesdits connecteurs sont reliés aux ports de communication (12) de l'ordinateur (3) pour échange de données avec un système de communication sans fil (14), pour lequel l'estimation de la vitesse d'écoulement est destinée.

En outre, l'ordinateur (3) met en oeuvre des protocoles de communication, par l'intermédiaire de ses ports de communication (12), afin de réceptionner les données importantes pour son fonctionnement (configuration, température de régulation, etc.), les données extérieures éventuellement nécessaires (température de l'air ambiante, angle d'attaque, etc.), ainsi que pour l'envoi des données importantes (estimation de la vitesse d'écoulement, panne d'un capteur, panne d'une résistance chauffante, obstruction d'un canal, etc.).

Pour des raisons de fiabilité et de sécurité, le dispositif, objet de la présente invention, peut inclure plusieurs ordinateurs (3) en redondance, plusieurs cartes d'alimentation (13) en redondance, et/ou plusieurs cartes de ports de communication (12) en redondance, de manière à ce qu'un élément valide remplisse sa mission si un élément similaire, en redondance, tombait en panne. De plus, les opérations suivantes peuvent être opérées :

○ l'ordinateur (3) compare les mesures des modules (capteurs, résistances) en redondance, ou les calculs de vitesses issus de différents types de capteurs 2, pour déterminer les modules n'étant plus opérationnels ;
○ L'ordinateur (3) peut mesurer l'intensité du courant traversant chaque résistance chauffante (7) de manière à détecter une résistance défaillante ;
○ L'ordinateur (3) peut faire une fusion des estimations de vitesses aérodynamiques issues du tube Pitot classique (mesure des pressions statiques et totales) et des mesures des vibrations (méthodes impliquant l'analyse de la densité spectrale) afin d'améliorer les performances du dispositif en termes de précision et robustesse.

Conformément à un mode de réalisation de l'invention, l'élément générateur de l'instabilité aérodynamique, le corps (40), peut être creux, afin de contenir une partie ou la totalité des éléments nécessaires à son fonctionnement, à savoir : un(des) capteur(s) permettant de mesurer l'instabilité aérodynamique ou hydrodynamique, les autres capteurs, une(des) résistance(s) chauffante(s), un(des) ordinateur(s) de traitement des données, une(des) carte(s) de communication sans fil 14, une(des) carte(s) d'alimentation 13, une(des) carte(s) offrant des ports de communication 12 à l'ordinateur, un(des) connecteur(s), etc.

La paroi aval (12) de la cavité est inclinée par rapport au plan YZ, pour permettre à tous les cristaux contenus dans le fluide de rebondir sur cette paroi aval, et de ne pas s'accumuler dans la cavité (1). Les parois de la cavité (1) peuvent être souples de manière à mettre en évidence les vibrations induites par l'écoulement du fluide. Lesdites parois disposent de tous les emplacements pour des capteurs 2 de pression, de vibrations, ainsi que des microphones à condensateur, tous reliés à l'ordinateur 3 qui calcule la vitesse de déplacement relatif du fluide, par rapport à la cavité 1. La figure 3 représente de même un corps 40 en forme conique dans lequel est contenue la cavité 1 dans le plan XY. La paroi aval de la cavité 1 présente une dimension selon l'axe Y supérieure à celle de sa paroi amont.

Les capteurs de pression (2) ainsi que les microphones à condensateurs sont en contact avec le fluide, alors que les capteurs de vibrations sont rigidement fixés aux parois de la cavité (1) mais à l'intérieur du corps. Le capteur de température 6 de la sonde et les résistances chauffantes (7), destinés à réguler la température de ladite sonde, sont également installés à l'intérieur du corps. Le capteur de température du fluide (8) est destiné à déterminer la valeur de la vitesse du son, dans l'environnement ambiant.

Le dispositif selon la présente invention est appliqué à l'estimation de la vitesse de déplacement d'un fluide par rapport à un mobile aérien, terrestre, marin (maritime/fluvial), sous-marin, spatial/planétaire, ou au sein d'une soufflerie ou d'une turbomachine. Il permet aussi l'estimation d'un fluide gazeux (vent) en mouvement dans un milieu naturel : station météorologique, éolienne, etc.

En outre, le dispositif selon la présente invention est appliqué à l'estimation d'un fluide liquide (eau) en mouvement dans un milieu naturel (Ruisseau, rivière, fleuve, lac, mer, etc.) ou bien dans un milieu bâti par l'homme (canalisation, pipeline, barrage, station d'épuration, etc).

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

En outre, l'ordinateur 3 peut réaliser tous les traitements permettant de réguler la température de l'élément 1, générateur de l'instabilité aérodynamique, à une température prédéterminée renseignée par un utilisateur. Le traitement effectué par l'ordinateur 3 pour réguler la température de l'élément 1 est alors le suivant:

○ interfaçage du capteur de température 6 de l'élément 1, pour importer les mesures de température,
○ algorithme de régulation de la température du dispositif pour calculer la commande à envoyer à une résistance chauffante 7,
○ interfaçage avec la (les) résistance(s) chauffante(s) 7 pour envoyer la commande.

Comme illustré par la figure 7 les capteurs et les résistances peuvent être reliés à un ordinateur 3, à des microprocesseurs et/ou à des microcontrôleurs, contenant de la mémoire de stockage. Des ports de communication 12 intégrés à l'ordinateur 3, ou mis à disposition par une carte indépendante reliée audit ordinateur permettent les liaisons entre les modules (capteurs, résistances) et l'ordinateur.

Le dispositif peut comprendre en outre un système d'alimentation 13 (module ou carte électronique d'alimentation par exemple) contenu dans l'élément 1 à l'origine de l'instabilité aérodynamique, ou non. Le système d'alimentation 13 est destiné à fournir du courant électrique adapté à l'ensemble des modules : les capteurs 2, 6, 8, les résistances chauffantes 7, la carte offrant des ports de communication 12 à l'ordinateur 3, un système de communication sans fil 14, etc.

Par ailleurs, l'ordinateur 3 peut être relié à des connecteurs destinés à alimenter en courant électrique ledit ordinateur 3, les capteurs, les résistances chauffantes 7, la carte offrant les ports de communication 12 à l'ordinateur 3, le système de communication sans fil 14, etc. Lesdits connecteurs sont reliés aux ports de communication 12 de l'ordinateur 3 pour échange de données avec un système de communication sans fil 14, pour lequel l'estimation de la vitesse d'écoulement est destinée.

En outre, l'ordinateur 3 met en œuvre des protocoles de communication, par l'intermédiaire de ses ports de communication 12, afin de réceptionner les données importantes pour son fonctionnement (configuration, température de régulation, etc.), les données extérieures éventuellement nécessaires (température de l'air ambiante, angle d'attaque, etc.), ainsi que pour l'envoi des données importantes (estimation de la vitesse d'écoulement, panne d'un capteur, panne d'une résistance chauffante, obstruction d'un canal, etc.).

Pour des raisons de fiabilité et de sécurité, le dispositif, objet de la présente invention, peut inclure plusieurs ordinateurs 3 en redondance, plusieurs cartes d'alimentation 13 en redondance, et/ou plusieurs cartes de ports de communication 12 en redondance, de manière à ce qu'un élément valide remplisse sa mission si un élément similaire, en redondance, tombait en panne. De plus, les opérations suivantes peuvent être opérées :

○ l'ordinateur 3 compare les mesures des modules (capteurs, résistances) en redondance, ou les calculs de vitesses issus de différents types de capteurs 2, pour déterminer les modules n'étant plus opérationnels ;
○ L'ordinateur 3 peut mesurer l'intensité du courant traversant chaque résistance chauffante 7 de manière à détecter une résistance défaillante ;

○ L'ordinateur 3 peut faire une fusion des estimations de vitesses aérodynamiques issues du tube Pitot classique (mesure des pressions statiques et totales) et des mesures des vibrations (méthodes impliquant l'analyse de la densité spectrale) afin d'améliorer les performances du dispositif en termes de précision et robustesse.

Conformément à un mode de réalisation de l'invention, l'élément 1 générateur de l'instabilité aérodynamique peut être creux, afin de contenir une partie ou la totalité des éléments nécessaires à son fonctionnement, à savoir : un(des) capteur(s) d'instabilité aérodynamique, les autres capteurs, une(des) résistance(s) chauffante(s), un(des) ordinateur(s) de traitement des données, une(des) carte(s) de communication sans fil 14, une(des) carte(s) d'alimentation 13, une(des) carte(s) offrant des ports de communication 12 à l'ordinateur, un(des) connecteur(s), etc.

En référence aux dessins, la figure 1 représente un mode de réalisation de l'invention et concerne un élément 1 spécialement développé pour se situer dans le flux du fluide et générer des instabilités qui sont mesurées par des capteurs inertiels de vibration 2 (accéléromètres), et éventuellement des capteurs de pression. La forme aérodynamique de l'élément 1 peut être profilée ou non.

Dans le cas d'une forme profilée : Le sillage est peu perturbé, donc peu d'instabilités à mesurer et l'on est en présence d'un écoulement non décollé (en régime normal). Cependant, cette option met en évidence, au mieux, des instabilités induites par l'écoulement du fluide, de manière à réduire le facteur bruit/vibrations, et, ainsi, obtenir une mesure optimale.

Dans le cas d'une forme non profilée : L'écoulement du fluide induit plus d'instabilités à mesurer, le sillage est plus perturbé (avec des Vortex). De plus, les formes arrondies disposent de points de décollement mobiles (moins faciles à exploiter) alors que les arrêtes vives des points de décollement fixes sont plus faciles à exploiter.

L'élément 1 peut présenter une forme pour laquelle le Strouhal dépend le moins possible du nombre de Reynolds ainsi que de la direction de l'écoulement (incidence). Le front de l'élément 1 de la sonde fait un angle $\theta$ (supérieur à 90 degrés (angle obtus)) avec sa surface d'installation, de manière à :

- ne pas fixer le givre (ne disposant pas de points d'arrêt du fluide)
- faire rebondir les éventuels cristaux en collision sur la surface frontale de la tige. Dans ce cas précis, un élément 1 de type « Tige à section transversale triangulaire » est choisi, comme représenté à la figure 1, pour la raison suivante :

  - l'élément 1 se situe directement dans le flux du fluide, le front dudit élément 1, situé en amont de l'écoulement, ne présente pas de point d'arrêt, de ce fait, ladite arête ne fixe pas le givre. Mais, les arêtes de l'élément 1 permettent de générer des tourbillons et donc de l'instabilité, qui sera mesurée pour calculer la vitesse de déplacement du fluide par rapport audit élément 1.

La tige rigide 1, qui peut être métallique, est usinée de manière à être creuse, afin de contenir tous les modules (capteurs et résistances) nécessaires à son fonctionnement. Sur l'une des deux faces triangulaires de cette tige 1 est associée une tige secondaire 10, qui est l'interface entre la tige triangulaire principale 1 et le support de fixation d'une sonde 11. Cette tige secondaire 10 a deux fonctions : éloigner la tige triangulaire principale 1 de la couche limite et disposer d'un matériau (éventuellement métallique) plus souple que la tige triangulaire principale 1, de manière à augmenter les oscillations de ladite tige triangulaire principale 1, induites par les instabilités aérodynamiques/hydrodynamiques, et ainsi les mettre en évidence.

Au sein de la tige triangulaire principale 1 est intégré un capteur de température 6 de la sonde 11 ainsi qu'une résistance chauffante 7, afin de réguler la température de la sonde 11 en fonction des consignes de l'utilisateur, et de corriger l'estimation du coefficient de raideur (et donc la fréquence propre $\omega_0$) de l'ensemble des tiges, en fonction de la température.

La tige triangulaire principale 1 comprend en outre des capteurs de pression 9 et des capteurs de température du fluide 8, afin de déterminer, dans le cas d'un fluide gazeux, la densité $\rho$ du fluide, et la vitesse du son dans le milieu. Ladite tige principale 1 comprend en outre un (des) capteur(s) de pression du fluide 2, et des capteurs de vibration 2 (un seul capteur est visible sur la figure 1), afin de mesurer les oscillations en pression du fluide dans la zone d'instabilité et les oscillations en vibration de la tige principale 1, issues de l'instabilité du sillage du fluide. Au moins un capteur de vibration 5 peut être installé au niveau du support, afin de permettre à un ordinateur 3, chargé d'estimer la vitesse, de disposer d'une référence des vibrations perturbatrices provenant de l'endroit où la tige triangulaire principale 1 est installée.

Un autre mode de réalisation de l'invention, représenté en figure 2, consiste à utiliser une surface plane inclinée de type « pseudo-tremplin » comme élément 1 générateur d'instabilité. L'angle $\theta$ entre le front de l'obstacle 1 (pseudo-tremplin) et sa surface d'installation est supérieur à 90 degrés (angle obtus), de manière à ne pas fixer le givre (il ne dispose pas de points d'arrêt du fluide) et à faire rebondir les éventuels cristaux en collision sur la surface frontale de l'obstacle 1 (pseudo-tremplin). Une autre surface 30 de forme quelconque, pouvant être creuse, est située en aval de l'écoulement par rapport à l'élément 1. Cette autre surface 30 est destinée à contenir les capteurs d'instabilité 2 (capteur(s) de pression, microphone, etc.) qui sont utilisés pour déterminer la vitesse. Cette autre surface 30 est située à une distance *h* de l'élément générateur d'instabilité 1, selon l'axe Y, de manière à permettre aux vortex d'avoir l'espace suffisant pour se développer, tout en étant capable de les mesurer. Cette autre surface 30 peut-être plane et/ou incurvée (convexe et/ou concave), et fait avec la normale de sa surface d'installation un angle *θ'* compris entre 0 et 90 degrés.

La figure 2A représente un autre mode de réalisation de l'invention dans lequel l'élément 1 est une marche descendante et les capteurs d'instabilité 2 (capteur(s) de pression, microphone, etc.) qui sont utilisé pour déterminer la vitesse sont placés en dessous de la surface plane de la marche.

En référence aux figures 6A et 6B, un troisième exemple de réalisation de l'invention concerne un corps 40 spécialement développé pour se situer dans le flux du fluide et générer des instabilités par l'intermédiaire d'une cavité 1. Les instabilités sont mesurées par des capteurs d'instabilité 2 placés au sein de ladite cavité 1. Le corps 40 est placé dans l'écoulement relatif du fluide. Ledit corps 40 est métallique et creux afin de contenir des éléments propres à l'invention. La cavité 1 est ouverte vers l'extérieur (une seule ouverture) du corps 40, est disposée de manière à ce que le fluide puisse pénétrer en son intérieur. Le corps 40, ainsi que la cavité 1 peuvent être réalisés en un bloc usiné, ou en plusieurs pièces. Le corps 40 présente un profil pseudo-triangulaire dans le plan XY (type « tremplin »), de manière à ne pas présenter de point d'arrêt, pour ne pas fixer le givre. La paroi avale de la cavité 1 présente une dimension selon l'axe Y supérieure à celle de sa paroi amont. La paroi avale est inclinée par rapport au plan YZ, pour permettre à tout cristaux contenus dans le fluide de rebondir sur cette paroi avale, et de ne pas s'accumuler dans la cavité 1. Les parois de la cavité 1 sont préférentiellement souples de manière à mettre en évidence les vibrations induites par l'écoulement du fluide. Lesdites parois disposent de tous les emplacements pour des capteurs 2 de pression, de vibrations, ainsi que des microphones à condensateur, tous reliés à l'ordinateur 3 qui calcule la vitesse de déplacement relatif du fluide, par rapport à la cavité 1. La figure 6C représente de même un corps 40 en forme conique dans lequel est contenue la cavité 1 dans le plan XY. La paroi avale de la cavité 1 présente une dimension selon l'axe Y supérieure à celle de sa paroi amont.

Les capteurs de pression 2 ainsi que les microphones à condensateurs sont en contact avec le fluide, alors que les capteurs de vibrations peuvent être rigidement fixés aux parois de la cavité 1 mais à l'intérieur du corps. Le capteur de température 6 de la sonde et les résistances chauffantes 7, destinés à réguler la température de ladite sonde, sont également installés à l'intérieur du corps. Le capteur de température du fluide 8 est destiné à déterminer la valeur de la vitesse du son, dans l'environnement ambiant.

Le dispositif selon la présente invention est appliqué à l'estimation de la vitesse de déplacement d'un fluide par rapport à un mobile aérien, terrestre, marin (maritime/fluvial), sous-marin, spatial/planétaire, ou au sein d'une soufflerie ou d'une turbomachine. Il permet aussi l'estimation d'un fluide gazeux (vent) en mouvement dans un milieu naturel : station météorologique, éolienne, etc.

En outre, le dispositif selon la présente invention est appliqué à l'estimation d'un fluide liquide (eau) en mouvement dans un milieu naturel (Ruisseau, rivière, fleuve, lac, mer, etc.) ou bien dans un milieu bâti par l'homme (canalisation, pipeline, barrage, station d'épuration, etc).

De nombreuses combinaisons peuvent être envisagées sans sortir du cadre de l'invention ; l'homme de métier choisira l'une ou l'autre en fonction des contraintes économiques, ergonomiques, dimensionnelles ou autres qu'il devra respecter.

## Revendications

1.  Dispositif de mesure de la vitesse de déplacement relative d'un fluide par rapport à un objet, le dispositif comprenant un corps principal adapté pour être installé sur l'objet et dans lequel une cavité (1) ouverte vers l'extérieur par une seule ouverture est effleurée par le mouvement relatif dudit fluide par rapport audit corps principal (40) le long d'un axe X, ce qui génère au sein de ladite cavité (1) un phénomène d'oscillation auto-entretenue dépendant de la vitesse de déplacement dudit fluide, le corps principal (40) étant adapté pour être installé sur une surface d'installation de l'objet et comprenant une paroi amont et une paroi aval d'une hauteur supérieure à la paroi amont (11), la paroi aval (12) étant inclinée par rapport au plan normal à l'axe X, le dispositif comprenant au moins un capteur (2), le ou les capteurs étant installés dans des parois de la cavité (1), ou contre lesdites parois, par un système de maintien, et exploitant ledit phénomène d'oscillation auto-entretenue en coopérant avec au moins un ordinateur (3) pour calculer la vitesse relative de déplacement dudit fluide.

2.  Dispositif, selon la revendication 1, **caractérisé en ce que** le corps (40) dans lequel est placée la cavité (1) a une forme aérodynamique demi-conique.

3.  Dispositif, selon la revendication 1, **caractérisé en ce que** le corps (40) dans lequel est placée la cavité (1) a une forme en profil pseudo triangulaire de type tremplin selon un plan de coupe XY, l'axe Y perpendiculaire à l'axe X, défini comme étant la normale à la base du dispositif en contact avec la surface d'installation (50).

4.  Dispositif selon les revendications 2 et 3 dans lequel, le front (41) du corps (40) fait un angle *θ*, angle entre le plan XZ ou la base du dispositif en contact avec la surface d'installation (50) et le front du dispositif, compris entre 0 et 90 degrés, l'axe Z étant défini de manière à ce que le repère XYZ soit un repère orthonormé direct.

5. Dispositif selon l'une des revendications 1 à 4, **caractérisé en ce que** la normale de l'ouverture de la cavité (1) fait un angle compris entre 0 et 90 degrés avec la base du dispositif en contact avec la surface d'installation (50) ; en d'autres termes, la hauteur de la paroi amont (11) est inférieur à la hauteur de la paroi aval (12), selon l'axe Y.

6. Dispositif selon la revendication 1 dans lequel la cavité (1) est telle que la largeur moyenne de sa paroi amont selon l'axe Z défini dans la revendication 4 soit inférieure à la largeur moyenne de sa paroi aval selon ledit axe Z.

7. Dispositif selon l'une des revendications précédentes dans lequel ledit au moins un capteur (2), permettant de mesurer l'instabilité aérodynamique ou hydrodynamique est un accéléromètre, sur n axes avec $n>=1$.

8. Dispositif selon l'une des revendications précédentes dans lequel ledit au moins un capteur (2), permettant de mesurer l'instabilité aérodynamique ou hydrodynamique est un capteur de pression, sur n axes avec $n > = 1$.

9. Dispositif selon l'une des revendications précédentes dans lequel ledit au moins un capteur (2), permettant de mesurer l'instabilité aérodynamique ou hydrodynamique est un microphone ou hydrophone, sur n axes avec $n > = 1$.

10. Dispositif selon l'une des revendications précédentes dans lequel le corps (40) comprend au moins un capteur de température (6), apte à mesurer sa propre température, et/ou au moins une résistance chauffante (7) pilotable afin de réguler la température dudit dispositif.

11. Dispositif selon la revendication précédente dans lequel le corps (40) comprend au moins un capteur de température du fluide (8).

12. Dispositif selon l'une quelconque des revendications précédentes dans lequel le corps (40) comprend au moins un capteur de pression statique du fluide (9).

13. Dispositif selon l'une des revendications précédentes dans lequel l'ordinateur (3), comprenant un système d'interfaçage (12) avec tous les capteurs (2) permettant de mesurer l'instabilité aérodynamique ou hydrodynamique, ainsi que les capteurs de températures (6) et (8), de pression statique du fluide (9) et la/les résistance(s) chauffante(s) (7), ainsi que de la mémoire de stockage, est destiné à réaliser des traitements nécessaires pour estimer la vitesse d'écoulement du fluide par rapport à la cavité (1).

14. Dispositif selon la revendication précédente dans lequel l'ordinateur (3) est apte à réaliser des tâches suivantes : - interfaçage avec les capteurs (2) pour importer leurs mesures ; - prétraitement des données par l'intermédiaire de filtrage de Kalman, d'un filtre passe-bas, d'un régresseur linéaire polynomial glissant ; - détermination de la transformée de Fourier et de la densité spectrale des instabilités induites.

15. Dispositif selon l'une quelconque des revendications 19 et 20 dans lequel lesdits traitements comprennent :

- la détermination des fréquences de réponse en instabilité, par identification d'au moins un pic de puissance;
- l'estimation de la vitesse de déplacement du fluide par rapport à l'élément (1) par application d'une formule reliant fréquence(s) et vitesse comme la formule de Rossiter par exemple ; et
- la réalisation d'une surveillance du système.

16. Dispositif selon l'une des revendications 18 à 20 **caractérisé en ce que** le dispositif comprend des capteurs de vibrations (5), de manière à disposer d'une référence de vibrations perturbatrices non induites par le fluide, de telle sorte que la différence de la densité spectrale des vibrations induites par l'écoulement du fluide avec la densité spectrale des vibrations perturbatrices permettre d'isoler les vibrations induites.

**Patentansprüche**

1. Vorrichtung zur Messung der relativen Fortbewegungsgeschwindigkeit eines Fluids im Verhältnis zu einem Objekt, wobei die Vorrichtung einen Hauptkörper umfasst, der für die Installation auf dem Objekt geeignet ist und wobei ein durch eine einzige Öffnung nach außen offener Hohlraum (1) von der relativen Bewegung des Fluids im Verhältnis zum Hauptkörper (40) entlang einer Achse X gestreift wird, was innerhalb des Hohlraums (1) ein selbsttragendes Oszillationsphänomen erzeugt, das von der Fortbewegungsgeschwindigkeit des Fluids abhängt, wobei der Hauptkörper (40) für eine Installation auf einer Installationsfläche des Objekts geeignet ist und eine vorgelagerte Wand und eine nachgelagerte Wand in einer Höhe umfasst, die höher als die der vorgelagerten Wand (11) ist, wobei die nachgelagerte Wand (12) im Verhältnis zu normalen Ebene zur Achse X geneigt ist, wobei die Vorrichtung mindestens einen Sensor (2) umfasst, wobei der oder die Sensoren in Wänden des Hohlraums (1) oder an den Wänden mittels eines Haltesystems installiert sind und das selbsttragende Oszillationsphänomen im Zusammenwirken mit mindestens einem Rechner (3) nutzen, um die relative Fortbewegungsgeschwindigkeit des Fluids zu berechnen.

2. Vorrichtung nach Anspruch 1, **dadurch gekennzeichnet, dass** der Körper (40), in dem der Hohlraum (1) platziert ist, eine halbkonische aerodynamische Form hat.

3. Vorrichtung, nach Anspruch 1, **dadurch gekennzeichnet, dass** der Körper (40), in dem der Hohlraum (1) platziert ist, eine pseudo-dreieckige Form vom Typ Sprungbrett gemäß einer Schnittebene XY hat, mit der Achse Y senkrecht zur Achse X, definiert als Normale zur Basis der Vorrichtung im Kontakt mit der Installationsfläche (50).

4. Vorrichtung nach den Ansprüchen 2 und 3, wobei die Front (41) des Körpers (40) eine Winkel $\theta$ bildet, wobei der Winkel zwischen der Ebene XZ oder der Basis der Vorrichtung im Kontakt mit der Installationsfläche (50) und der Front der Vorrichtung zwischen 0 und 90 Grad liegt, wobei die Achse Z derart definiert ist, dass der Bezug XYZ ein direkter orthonormierter Bezug ist.

5. Vorrichtung nach einem der Ansprüche 1 bis 4, **dadurch gekennzeichnet, dass** die Normale der Öffnung des Hohlraums (1) einen Winkel zwischen 0 und 90 Grad mit der Basis der Vorrichtung im Kontakt mit der Installationsfläche (50) bildet; mit anderen Worten, die Höhe der vorgelagerten Wand (11) kleiner als die Höhe der nachgelagerte Wand (12) gemäß der Achse Y ist.

6. Vorrichtung nach Anspruch 1, wobei der Hohlraum (1) derart ist, dass die mittlere Breite seiner vorgelagerten Wand gemäß der Achse Z nach Anspruch 4 kleiner als die mittlere Breite seiner nachgelagerten Wand gemäß der Achse Z ist.

7. Vorrichtung nach einem der vorangehenden Ansprüche, wobei der mindestens eine Sensor (2), der erlaubt, die aerodynamische oder hydrodynamische Instabilität zu messen, ein Beschleunigungssensor ist, auf n Achsen mit $n >= 1$.

8. Vorrichtung nach einem der vorangehenden Ansprüche, wobei der mindestens eine Sensor (2), der erlaubt, die aerodynamische oder hydrodynamische Instabilität zu messen, ein Drucksensor ist, auf n Achsen mit $n >= 1$.

9. Vorrichtung nach einem der vorangehenden Ansprüche, wobei der mindestens eine Sensor (2), der erlaubt, die aerodynamische oder hydrodynamische Instabilität zu messen, ein Mikrofon oder Hydrophon ist, auf n Achsen mit $n >= 1$.

10. Vorrichtung nach einem der vorangehenden Ansprüche, wobei der Körper (40) mindestens einen Temperatursensor (6) umfasst, der imstande ist, seine eigene Temperatur zu messen, und/oder mindestens einen steuerbaren Heizwiderstand (7), um die Temperatur der Vorrichtung zu regulieren.

11. Vorrichtung nach vorangehendem Anspruch, wobei der Körper (40) mindestens einen Temperatursensor des Fluids (8) umfasst.

12. Vorrichtung nach einem der vorangehenden Ansprüche, wobei der Körper (40) mindestens einen Sensor des statischen Drucks des Fluids (9) umfasst.

13. Vorrichtung nach einem der vorangehenden Ansprüche, wobei der Rechner (3), der ein Schnittstellensystem (12) mit allen Sensoren (2), die erlauben, die aerodynamische oder hydrodynamische Instabilität zu messen, sowie mit den Sensoren der Temperatur (6) und (8), des statischen Drucks des Fluids (9) und dem/den Heizwiderstand/- widerständen (7), sowie ein Speicherelement umfasst bestimmt ist, notwendige Verarbeitungen durchzuführen, um die Fließgeschwindigkeit des Fluids im Verhältnis zum Hohlraum (1) zu schätzen.

14. Vorrichtung nach vorangehendem Anspruch, wobei der Rechner (3) imstande ist, die folgenden Aufgaben zu erfüllen: - Schnittstelle mit den Sensoren (2), um ihre Messungen zu importieren; - Vorverarbeitung der Daten durch Kalman-Filter, einen Tiefpassfilter, eine gleitende polynomiale lineare Regression; - Bestimmung der Fourier-Transformation und der spektralen Dichte der induzierten Instabilitäten.

15. Vorrichtung nach einem der Ansprüche 19 und 20, wobei die Verarbeitungen umfassen:

- die Bestimmung der Instabilitäts-Antwortfrequenzen durch Identifikation von mindestens einer Leistungsspitze;
- die Schätzung der Fortbewegungsgeschwindigkeit des Fluids im Verhältnis zum Element (1) durch Anwendung einer Formel, die Frequenz(en) und Geschwindigkeit verbindet wie beispielsweise die Rossiter-Formel; und
- die Durchführung einer Überwachung des Systems.

16. Vorrichtung nach einem der Ansprüche 18 bis 20, **dadurch gekennzeichnet, dass** die Vorrichtung Vibrationssensoren (5) umfasst, um über eine Referenz von Störvibrationen zu verfügen, die nicht von dem Fluid induziert sind, so dass die Differenz der spektralen Dichte der Vibrationen, die durch das Fließen des Fluids induziert sind, mit der spektralen Dichte der Störvibrationen erlaubt, die induzierten Vibrationen zu isolieren.

**Claims**

1. Device for measuring the relative travelling speed of a fluid in relation to an object, the device comprising a main body adapted to be installed on the object and wherein a cavity (1) that is open toward the outside by a single opening is grazed by the relative movement of said fluid in relation to said main body (40) along an axis X, which generates, within said cavity (1), a self-sustained oscillating phenomenon dependent on the travelling speed of said fluid, the main body (40) being adapted to be installed on an installation surface of the object and comprising an upstream wall and a downstream wall, the height whereof is greater than that of the upstream wall (11), the downstream wall (12) being inclined relative to the plane that is normal to the axis X, the device comprising at least one sensor (2), the one or more sensors being installed in walls of the cavity (1), or against said walls, by a holding system, and exploiting said self-sustained oscillating phenomenon by cooperating with at least one computer (3) in order to compute the relative travelling speed of said fluid.

2. Device according to claim 1, **characterised in that** the body (40) in which the cavity (1) is placed has a semi-conical aerodynamic shape.

3. Device according to claim 1, **characterised in that** the body (40) in which the cavity (1) is placed has a pseudo-triangular shape of the ramp type according to a sectional plane XY, the axis Y being perpendicular to the axis X, defined as being the normal to the base of the device in contact with the installation surface (50).

4. Device according to claims 2 and 3, wherein the front (41) of the body (40) forms an angle $\theta$, which is the angle between the plane XZ or the base of the device in contact with the installation surface (50) and the front of the device, that lies in the range 0 to 90 degrees, the axis Z being defined such that the frame of reference XYZ is a direct orthonormal frame of reference.

5. Device according to one of claims 1 to 4, **characterised in that** the normal of the opening of the cavity (1) forms an angle that lies in the range 0 to 90 degrees with the base of the device in contact with the installation surface (50); in other words, the height of the upstream wall (11) is less than the height of the downstream wall (12), along the axis Y.

6. Device according to claim 1, wherein the cavity (1) is such that the average width of the upstream wall thereof along the axis Z defined in claim 4 is less than the average width of the downstream wall thereof along said axis Z.

7. Device according to one of the preceding claims, wherein said at least one sensor (2), enabling the aerodynamic or hydrodynamic instability to be measured, is an accelerometer, along n axes where $n >= 1$.

8. Device according to one of the preceding claims, wherein said at least one sensor (2), enabling the aerodynamic or hydrodynamic instability to be measured, is a pressure sensor, along n axes where $n >= 1$.

9. Device according to one of the preceding claims, wherein said at least one sensor (2), enabling the aerodynamic or hydrodynamic instability to be measured, is a microphone or hydrophone, along n axes where $n >= 1$.

10. Device according to one of the preceding claims, wherein the body (40) comprises at least one temperature sensor (6), capable of measuring its own temperature, and/or at least one heating resistor (7) capable of being controlled so as to regulate the temperature of said device.

11. Device according to the preceding claim, wherein the body (40) comprises at least one sensor (8) for measuring the temperature of the fluid.

12. Device according to any one of the preceding claims, wherein the body (40) comprises at least one sensor (9) for measuring the static pressure of the fluid.

13. Device according to one of the preceding claims, wherein the computer (3), comprising an interfacing system (12) for interfacing with all of the sensors (2), allowing the aerodynamic or hydrodynamic instability to be measured, in addition to the fluid temperature sensors (6) and (8), fluid static pressure sensors (9) and the one or more heating resistors (7), as well as the storage memory, is intended to carry out the necessary processing operations in order to estimate the flow speed of the fluid in relation to the cavity (1).

14. Device according to the preceding claim, wherein the computer (3) is capable of carrying out the following tasks: - interfacing with the sensors (2) for importing the measurements thereof; - preliminary processing of the data by means of Kalman filtering, a low-pass filter, and a sliding polynomial linear regressor; - determining the Fourier transform and the spectral density of the induced instabilities.

15. Device according to any one of claims 19 and 20, wherein said processing operations comprise:

- determining the instability response frequencies by identifying at least one power peak;
- estimating the travelling speed of the fluid in relation to the element (1) by applying a formula linking one or more frequencies with speed, such as the Rossiter formula for example; and
- carrying out system monitoring.

16. Device according to one of claims 18 to 20, **characterised in that** the device comprises vibration sensors (5), so as to obtain a reference of interfering vibrations not induced by the fluid, such that the difference between the spectral density of the vibrations induced by the flow of the fluid and the spectral density of the interfering vibrations allows the induced vibrations to be isolated.

FIG. 1

FIG. 2

FIG. 3

FIG. 4

FIG. 5